# EUROPEAN PATENT APPLICATION

(11) **EP 4 435 886 A1**
(43) Date of publication of application: **25.09.2024**
(21) Application number: 24150189.9
(22) Date of filing: 03.01.2024
(51) Int. Cl.: H01M 4/133, H01M 4/134, H01M 4/525, H01M 4/587, H01M 10/0567, H01M 10/0568, H01M 10/0569, H01M 10/42, H01M 10/0525

(54) **ELECTROLYTE FOR RECHARGEABLE LITHIUM BATTERY AND RECHARGEABLE LITHIUM BATTERY INCLUDING THE SAME**

(30) Priority: 24.03.2023 KR 20230038862
(71) Applicant: Samsung SDI Co., Ltd., Yongin-si, Gyeonggi-do 17084 (KR)
(72) Inventor: Seo, Jinah, 17084 Yongin-si, Gyeonggi-do (KR); Koh, Sujeong, 17084 Yongin-si, Gyeonggi-do (KR); Cho, Erang, 17084 Yongin-si, Gyeonggi-do (KR); Lim, Jin-Hyeok, 17084 Yongin-si, Gyeonggi-do (KR); Kim, Yunhee, 17084 Yongin-si, Gyeonggi-do (KR)
(74) Representative: Gulde & Partner

(57) **Abstract**

An electrolyte for a rechargeable lithium battery and a rechargeable lithium battery including the same, the electrolyte including a non-aqueous organic solvent, a lithium salt, and a calcium salt.

## Description

### BACKGROUND

### 1. Field

Embodiments of the present disclosure described herein are related to an electrolyte for a rechargeable lithium battery and a rechargeable lithium battery including the same.

### 2. Description of Related Art

Rechargeable lithium batteries may be recharged and has three or more times as high (e.g., have at least three times the) energy density per unit weight as comparable lead acid (storage) batteries, nickel-cadmium batteries, nickel hydrogen batteries, nickel zinc batteries and/or the like. Rechargeable lithium batteries may be also charged at a relatively high rate and thus, are commercially manufactured for a laptop, a cell phone, an electric tool, an electric bike, and/or the like, and improvements of additional energy density have been sought.

Such rechargeable lithium batteries are manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Recently, development of rechargeable lithium batteries has been progressing in a direction of increasing energy density. However, as the energy density of rechargeable lithium batteries is increased, there are problems of deteriorating cycle-life (life cycle) characteristics at room temperature and storage performance at a high temperature (e.g., relatively high temperatures) and increasing resistance at both room temperature and/or high temperature (e.g., relatively high temperatures).

Accordingly, there is a demand or desired for an electrolyte having improved safety without performance deterioration at room temperature and/or high temperature.

### SUMMARY

The invention is defined by the appended claims. The description that follows is subjected to this limitation. Any disclosure lying outside the scope of said claims is only intended for illustrative as well as comparative purposes.

Aspects according to one or more embodiments are directed toward an electrolyte for a rechargeable lithium battery having improved stability without deterioration in performance under any condition of room temperature or high temperature (e.g., relatively high temperatures).

Aspects according to one or more embodiments are directed toward a rechargeable lithium battery with improved cycle-life characteristics at room temperature and storage performance at high temperature, and improved rapid charging performance while suppressing resistance increase at room temperature and/or high temperature by applying the electrolyte for a rechargeable lithium battery.

Additional aspects will be set forth in part in the description which follows and, in part, will be apparent from the description, or may be learned by practice of the presented embodiments of the disclosure.

The electrolyte may suppress lithium precipitation by including a calcium salt at an appropriate or suitable concentration as an additive, may improve cycle-life characteristics at room temperature and storage performance at high temperature, and may improve rapid charging performance while suppressing resistance increase under any conditions of room temperature and high temperature.

### BRIEF DESCRIPTION OF THE DRAWINGS

FIG. 1 is a schematic view showing a rechargeable lithium battery according to some embodiments of the present invention.
FIG. 2 is an XPS (X-ray photoelectron spectroscopy) analysis result of the surface of the negative electrode disassembled from each rechargeable lithium battery cell of Example 4 and Comparative Example 1 after completion of Evaluation 1 (horizontal axis unit: eV).
FIG. 3 is an XPS analysis result of the surface of the negative electrode disassembled from each rechargeable lithium battery cell of Example 4 and Comparative Example 1 after completion of Evaluation 2 of the present disclosure (horizontal axis unit: eV).

### DETAILED DESCRIPTION

Hereinafter, a rechargeable lithium battery according to embodiments of the present disclosure will be described in more detail with reference to the accompanying drawings. However, these embodiments are examples, and the present disclosure is not limited thereto and the present disclosure is defined by the scope of claims.

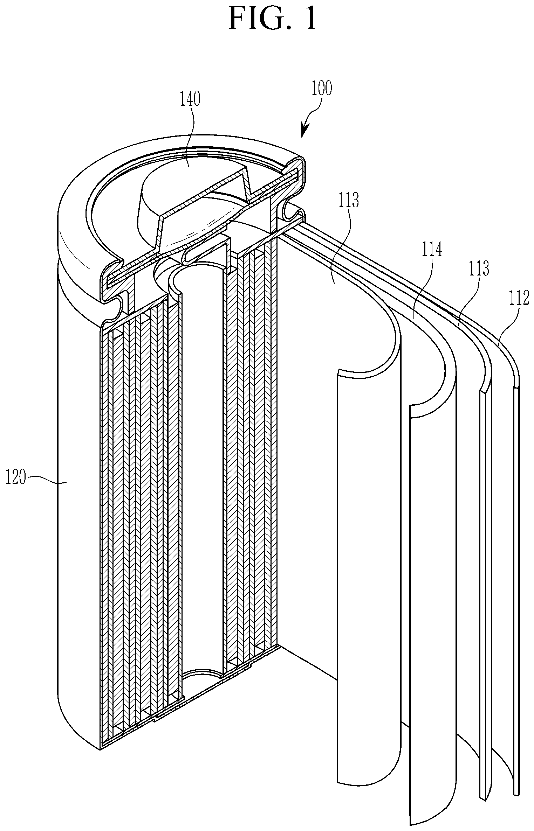

Herein, as an example of the rechargeable lithium battery, a cylindrical rechargeable lithium battery will be described. FIG. 1 schematically illustrates the structure of a rechargeable lithium battery according to some embodiments. Referring to FIG. 1, a rechargeable lithium battery 100 according to some embodiments includes a battery cell including a positive electrode 114, a negative electrode 112 facing the positive electrode 114, a separator 113 between the positive electrode 114 and the negative electrode 112, and an electrolyte impregnating the positive electrode 114, the negative electrode 112, and the separator 113, a battery case 120 housing the battery cell, and a sealing member 140 sealing the battery case 120.

According to one aspect of the present invention, there is provided an electrolyte for a rechargeable lithium battery including a non-aqueous organic solvent, a lithium salt, and a calcium salt, wherein a concentration of the calcium salt in the electrolyte for a rechargeable lithium battery is 0.01 wt% to 5 wt%.

If the calcium salt-based additive is added in an appropriate or suitable concentration to the electrolyte of the rechargeable lithium battery, the calcium salt is reduced on the surface of the negative electrode to form a lithium-friendly film. As described previously, if the lithium-friendly film is formed on the surface of the negative electrode, precipitation of lithium (for example, lithium dendrite) is suppressed or reduced even under one or more suitable conditions such as room temperature, high temperature, and rapid charging.

Accordingly, the electrolyte for a rechargeable lithium battery of some embodiments includes the calcium salt at an appropriate or suitable concentration as an additive and thereby may suppress or reduce lithium precipitation, improve cycle-life characteristics at room temperature and storage performance at high temperature, suppress or reduce resistance increase at any condition of room temperature and high temperature and improve rapid charging performance.

However, if the concentration of the calcium salt in the electrolyte is less than 0.01 wt%, storage characteristics at a high temperature may be deteriorated, and if it is greater than 5 wt%, cycle-life may be reduced due to an increase in interface resistance.

Accordingly, an electrolyte for a rechargeable lithium battery according to some embodiments includes a calcium salt additive at an appropriate or suitable concentration (i.e., greater than or equal to 0.01 wt% and less than 5 wt%), thereby implementing a rechargeable lithium battery with improved safety without performance degradation.

For example, the concentration of the calcium salt in the electrolyte for a rechargeable lithium battery may be greater than or equal to 0.01 wt%, greater than or equal to 0.1 wt%, greater than or equal to 0.3 wt%, or greater than or equal to 0.5 wt%. In some embodiments, the concentration of the calcium salt in the electrolyte for a rechargeable lithium battery may be less than or equal to 5 wt% or less than or equal to 3 wt%.

For example, a concentration of the calcium salt in the electrolyte for a rechargeable lithium battery may be greater than or equal to 0.01 wt% and less than 5 wt%; greater than or equal to 0.01 wt% and less than or equal to 3 wt%; or greater than or equal to 0.1 wt% and less than or equal to 3 wt%. If the above example ranges are satisfied, a rechargeable lithium battery in which cycle-life characteristics at room temperature and storage performance at high temperature are optimized and resistance increase is suppressed or reduced under any condition between room temperature and high temperature can be implemented.

The calcium salt may be a calcium phosphate salt, a calcium imide salt, a calcium nitrate salt, or a combination thereof. Among calcium salt-based additives, these may be enhanced, optimized or made suitable for realizing a rechargeable lithium battery in which resistance increase is suppressed or reduced at room temperature and/or high temperature while cycle-life (life cycle) characteristics at room temperature and storage performance at high temperature are improved.

For example, the calcium salt may be Ca(PF₆)₂ (calcium hexafluorophosphate, calcium bis(hexafluorophosphate)), Ca[FSI]₂ (calcium bis(fluorosulfonyl)imide, calcium bis(fluorosulfonyl)imide), Ca[TFSI]₂ (calcium bis(trifluoromethanesulfonyl)imide, Ca(NO₃)₂ (calcium nitrate), or a combination thereof.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include at least one of ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC). The ester-based solvent may include at least one of methyl acetate, ethyl acetate, n-propyl acetate, t-butyl acetate, methylpropionate, ethylpropionate, propylpropionate, decanolide, mevalonolactone, and caprolactone. The ether-based solvent may include at least one of dibutyl ether, tetraglyme, diglyme, dimethoxyethane, 2-methyltetrahydrofuran, and tetrahydrofuran. The ketone-based solvent may include cyclohexanone. The alcohol-based solvent may include at least one of ethyl alcohol and isopropyl alcohol and examples of the aprotic solvent include nitriles such as R-CN (wherein R is a C2 to C20 linear, branched, or cyclic hydrocarbon group, a double bond, an aromatic ring, or an ether bond), amides such as dimethylformamide, dioxolanes such as 1 ,3-dioxolane, and sulfolanes.

The non-aqueous organic solvent may be utilized alone or in a mixture. When the organic solvent is utilized in a mixture, their mixing ratio may be controlled or selected in accordance with a desirable battery performance.

The carbonate-based solvent is prepared by mixing a cyclic carbonate and a chain carbonate. The cyclic carbonate and chain carbonate are mixed together in a volume ratio of 5:95 to 50:50. When the mixture is utilized as an electrolyte, it may have enhanced performance.

For example, ethylene carbonate (EC) may be utilized as the cyclic carbonate, and ethylmethyl carbonate (EMC) and dimethyl carbonate (DMC) may be utilized as the chain carbonate.

For example, the non-aqueous organic solvent may include a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) are mixed in a volume ratio of EC:EMC:DMC = 1:0.5:5 to 5:3:10 may exhibit improved performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

The aromatic hydrocarbon-based solvent may be an aromatic hydrocarbon-based compound represented by Chemical Formula I.

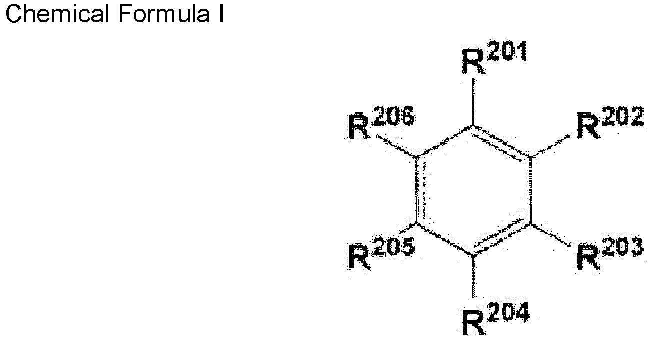

In Chemical Formula I, R²⁰¹ to R²⁰⁶ may each independently be the same or different and are selected from among hydrogen, a halogen, a C1 to C10 alkyl group, a haloalkyl group, and/or a combination thereof.

Examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or a combination thereof.

The electrolyte may further include vinylene carbonate, vinyl ethylene carbonate, or an ethylene carbonate-based compound of Chemical Formula II to improve cycle-life of a battery as a cycle life-enhancing additive.

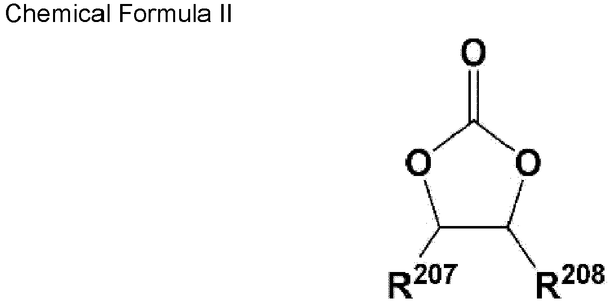

In Chemical Formula II, R²⁰⁷ and R²⁰⁸ may each independently be the same or different and are selected from among hydrogen, a halogen, a cyano group (CN), a nitro group (NO₂), or a C1 to C5 fluoroalkyl group, provided that at least one of R²⁰⁷ and R²⁰⁸ is a halogen, a cyano group (CN), a nitro group (NO₂), or a C1 to C5 fluoroalkyl group, and R²⁰⁷ and R²⁰⁸ are not concurrently (e.g., not simultaneously) hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate and/or fluoroethylene carbonate. The amount of the additive for improving cycle-life may be utilized within an appropriate or suitable range.

The lithium salt is dissolved in a non-aqueous organic solvent, supplies a battery with lithium ions, basically operates the rechargeable lithium battery, and improves transportation of the lithium ions between positive and negative electrodes. Examples of the lithium salt include one or more selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₐF₂ₐ₊₁SO₂)(C_{b}F_{2b+1}SO₂), wherein, a and b are natural numbers, for example an integer of 1 to 20, LiCl, Lil, and/or LiB(C₂O₄)₂ (lithium bis(oxalato) borate: LiBOB). The lithium salt may be utilized in a concentration in a range of about 0.1 M to about 2.0 M. If the lithium salt is included at the above concentration range, an electrolyte may have excellent or suitable performance and lithium ion mobility due to optimal or suitable electrolyte conductivity and viscosity.

Some embodiments of the present invention provide a rechargeable lithium battery including a positive electrode including a positive electrode active material; a negative electrode including a negative electrode active material; and the aforementioned electrolyte.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or a combination thereof may be utilized.

The composite oxide having a coating layer on the surface thereof may be utilized, or a mixture of the composite oxide and the composite oxide having a coating layer may be utilized. The coating layer may include a coating element compound of an oxide of a coating element, a hydroxide of a coating element, an oxyhydroxide of a coating element, an oxycarbonate of a coating element, or a hydroxycarbonate of a coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable processes as long as it does not cause any side effects on the properties of the positive electrode active material (e.g., spray coating, dipping), which is suitable for utilization to persons having ordinary skill in this art, and thus a detailed description thereof is not provided.

For example, the positive electrode active material may include a lithium nickel-based composite oxide represented by Chemical Formula 1:

Chemical Formula 1 Lia₁Nix₁M¹_{y1}M²_{z1}O_{2-b1}X_{b1}

In Chemical Formula 1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² may each independently be one or more elements selected from among Al, B, Ba, Ca, Ce, Co, Cr, Cu, Fe, Mg, Mn, Mo, Nb, Si, Sr, Ti, V, W, and/or Zr; and X is one or more elements selected from among F, P, and/or S.

In Chemical Formula 1, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y10.1, and 0≤z1≤0.1.

For example, the positive electrode active material may include a lithium nickel-based composite oxide represented by Chemical Formula 2. The compound represented by Chemical Formula 2 may be referred to as a lithium nickel cobalt-based composite oxide:

Chemical Formula 2 Liₐ₂Niₓ₂Co_{y2}M³_{z2}O_{2-b2}X_{b2}

In Chemical Formula 2, 0.9≤a2≤1.8, 0.7≤x2<1, 0<y2≤0.2, 0≤z2≤0.2, 0.9≤x2+y2+z2:≤1.1, 0≤b2≤0.1 M³ is one or more elements selected from among Al, B, Ba, Ca, Ce, Cr, Fe, Mg, Mn, Mo, Nb, Si, Sr, Ti, V, W, and/or Zr, and X is one or more elements selected from among F, P, and/or S.

In Chemical Formula 2, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

For example, the positive electrode active material may include a lithium nickel-based composite oxide represented by Chemical Formula 3. The compound represented by Chemical Formula 3 may be referred to as lithium nickel-cobalt-aluminum oxide or lithium nickel-cobalt-manganese oxide.

Chemical Formula 3 Liₐ₃Niₓ₃Co_{y3}M⁴_{z3}M⁵_{w3}O_{2-b3}Xb3

In Chemical Formula 3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, 0≤b3≤0.1, M⁴ is one or more elements selected from among Al and/or Mn, M⁵ is one or more elements selected from among B, Ba, Ca, Ce, Cr, Fe, Mg, Mo, Nb, Si, Sr, Ti, V, W, and/or Zr, and X is one or more elements selected from among F, P, and/or S.

In Chemical Formula 3, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

For example, the positive electrode active material may include a lithium nickel-based composite oxide represented by Chemical Formula 4. The compound represented by Chemical Formula 4 may be referred to as a cobalt-free lithium nickel-manganese-based oxide.

Chemical Formula 4 Liₐ₄Niₓ4Mn_{y4}M⁶_{z4}O_{2-b4}Xb4

In Chemical Formula 4, 0.9≤a2≤1.8, 0.7≤x4<1, 0<y4≤0.2, 0≤z4≤0.2, 0.9≤x4+y4+z4≤1.1, 0≤b4≤0.1 M⁶ is one or more elements selected from among Al, B, Ba, Ca, Ce, Cr, Fe, Mg, Mo, Nb, Si, Sr, Ti, V, W, and/or Zr, and X is one or more elements selected from among F, P, and/or S.

In the positive electrode active material according to some embodiments, the first positive electrode active material may be included in an amount of 50 wt% to 90 wt%, and the second positive electrode active material may be included in an amount of 10 wt% to 50 wt%, based on a total amount of the first and second positive electrode active materials. The first positive electrode active material may be included in an amount of, for example, 60 wt% to 90 wt%, or 70 wt% to 90 wt%, and the second positive electrode active material may be included in an amount of, for example, 10 wt% to 40 wt%, or 10 wt% to 30 wt%. If the content (e.g., amount) ratios of the first positive electrode active material and the second positive electrode active material are as above, the positive electrode active material including the same may realize high capacity, improve mixture density, and exhibit high energy density.

A content (e.g., amount) of the positive electrode active material may be 50 wt% to 99 wt%, 60 wt% to 99 wt%, 70 wt% to 99 wt%, 80 wt% to 99 wt%, or 90 wt% to 99 wt% based on a total weight of the positive electrode active material layer.

In some embodiments of the present disclosure, the positive electrode active material layer may optionally include a conductive material and a binder. Each content (e.g., amount) of the conductive material and the binder may be 1.0 wt% to 5.0 wt%, based on a total weight of the positive electrode active material layer.

The conductive material is utilized to impart conductivity to the negative electrode, and any electrically conductive material may be utilized as a conductive material unless it causes a chemical change in a battery. Examples of the conductive material may include a carbon-based material such as natural graphite, artificial graphite, carbon black, acetylene black, ketjen black, carbon fiber, and/or the like; a metal-based material of a metal powder or a metal fiber including copper, nickel, aluminum, silver, and/or the like; a conductive polymer such as a polyphenylene derivative; or a mixture thereof.

The binder improves binding properties of positive electrode active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

The positive electrode current collector may include Al, but is not limited thereto.

The negative electrode includes a negative electrode current collector and a negative electrode active material layer including the negative electrode active material on the negative electrode current collector.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions includes carbon materials. The carbon material may be any generally-utilized carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and/or Sn.

The material capable of doping and dedoping lithium may include Si, SiOₓ (0 < x < 2), a Si-Q alloy (wherein Q is selected from among an alkali metal, an alkaline-earth metal, a Group 13 element, a Group 14 element, a Group 15 element, a Group 16 element, a transition metal, a rare earth element, and/or a combination thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and/or the like. At least one of them may be mixed with SiO₂.

The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or combination(s) thereof.

The transition metal oxide may be a vanadium oxide, a lithium vanadium oxide, and/or the like.

In an embodiment, the negative electrode active material may include at least one selected from among graphite and a Si composite.

The Si composite may include: a core including Si-containing particles; and amorphous carbon. For example, the Si-containing particles may include at least one selected from among Si-C composite, SiOₓ (0 < x ≤ 2), and an Si alloy.

For example, the Si-C composite may include: a core including Si particles; and amorphous carbon.

A central portion of the core, including the Si particles, may also include pores, and a radius of the central portion may correspond to about 30% to about 50% of a radius of the Si-C composite.

The Si particles may have an average particle diameter of about 10 nm to about 200 nm.

As utilized herein, the average particle diameter may be a particle size (D50) at a volume ratio of 50% in a cumulative size-distribution curve.

If the average particle diameter of the Si particles is within the above range, volume expansion occurring during charging and discharging may be suppressed or reduced, and a disconnection of a conductive path due to particle crushing during charging and discharging may be prevented or reduced.

The Si particles may be included in an amount of 1 wt% to 60 wt%, for example, 3 wt% to 60 wt%, based on a total weight of the Si-C composite.

The central portion may not include (e.g., may exclude any) amorphous carbon, and the amorphous carbon may be present only on the surface portion of the negative electrode active material.

Herein, the surface portion indicates a region from the central portion of the negative electrode active material to the outermost surface of the negative electrode active material.

In some embodiments, the Si particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or a combination thereof.

The negative electrode active material may further include crystalline carbon.

If the negative electrode active material includes a Si-C composite and crystalline carbon together, the Si-C composite and crystalline carbon may be included in the form of a mixture, and in this case, the Si-C composite and crystalline carbon may be included in a weight ratio of about 1:99 to about 50:50. For example, the Si-C composite and crystalline carbon may be included in a weight ratio of 3 : 97 to 20 : 80 or 5 : 95 to 20 : 80.

The crystalline carbon may be for example graphite, and more specifically natural graphite, artificial graphite, or a mixture thereof.

The crystalline carbon may have an average particle diameter of 5 µm to 30 µm.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on a total weight of the negative electrode active material layer.

In some embodiments, the negative electrode active material layer may include a binder, and optionally a conductive material. In the negative electrode active material layer, the amount of the binder may be about 1 wt% to about 5 wt% based on a total weight of the negative electrode active material layer. When it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrine, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and a combination thereof.

When the water-soluble binder is utilized as the negative electrode binder, a cellulose-based compound may be further utilized to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative electrode active material.

The conductive material is included to provide electrode conductivity and any electrically conductive material may be utilized as a conductive material unless it causes a chemical change. Examples thereof may be a carbon-based material such as natural graphite, artificial graphite, carbon black, acetylene black, ketjen black, carbon fiber and/or the like; a metal-based material such as a metal powder or a metal fiber and/or the like of copper, nickel, aluminum, silver, and/or the like; a conductive polymer such as a polyphenylene derivative and/or the like, or a mixture thereof.

The negative electrode current collector may be selected from among a copper foil, a nickel foil, a stainless steel foil, a titanium foil, a nickel foam, a copper foam, a polymer substrate coated with a conductive metal, and/or a combination thereof.

The rechargeable lithium battery may further include a separator between the negative electrode and the positive electrode, depending on a type or kind of the rechargeable lithium battery. These separators are porous substrates; or it may be a composite porous substrate.

The porous substrate may be a substrate including pores, and lithium ions may move through the pores. The porous substrate may be for example may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one selected from among a heat-resistant layer and/or an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler or an inorganic filler.

Hereinafter, examples of the present disclosure and comparative examples are described. These examples, however, are not in any sense to be interpreted as limiting the scope of the present disclosure.

### Preparation of Electrolyte for Rechargeable Lithium Battery

### Preparation Example 1

As a non-aqueous organic solvent, a carbonate-based solvent prepared by mixing ethylene carbonate (EC): ethylmethyl carbonate (EMC): dimethyl carbonate (DMC) = 20:10:70 in a volume ratio was utilized.

With the non-aqueous organic solvent, a 1.5 M lithium salt (LiPF₆) was mixed, and 0.01 wt% of a calcium salt (Ca[TFSI]₂) as an additive was added thereto, finally obtaining an electrolyte for a rechargeable lithium battery.

### Preparation Example 2

An electrolyte for a rechargeable lithium battery was prepared in substantially the same manner as in Preparation Example 1 except that 0.1 wt% of a calcium salt (Ca[TFSI]₂) was utilized as the additive.

### Preparation Example 3

An electrolyte for a rechargeable lithium battery was prepared in substantially the same manner as in Preparation Example 1 except that 0.3 wt% of a calcium salt (Ca[TFSI]₂) was utilized as the additive.

### Preparation Example 4

An electrolyte for a rechargeable lithium battery was prepared in substantially the same manner as in Preparation Example 1 except that 0.5 wt% of a calcium salt (Ca[TFSI]₂) was utilized as the additive.

### Preparation Example 5

An electrolyte for a rechargeable lithium battery was prepared in substantially the same manner as in Preparation Example 1 except that 1 wt% of a calcium salt (Ca[TFSI]₂) was utilized as the additive.

### Preparation Example 6

An electrolyte for a rechargeable lithium battery was prepared in substantially the same manner as in Preparation Example 1 except that 3 wt% of a calcium salt (Ca[TFSI]₂) was utilized as the additive.

### Preparation Example 7

An electrolyte for a rechargeable lithium battery was prepared in substantially the same manner as in Preparation Example 1 except that 0.5 wt% of a calcium salt (Ca[FSI]₂) was utilized as the additive.

### Preparation Example 8

An electrolyte for a rechargeable lithium battery was prepared in substantially the same manner as in Preparation Example 1 except that 0.5 wt% of a calcium salt (CaPF₆) was utilized as the additive.

### Comparative Preparation Example 1

An electrolyte for a rechargeable lithium battery was prepared in substantially the same manner as in Preparation Example 1 except that no additive was utilized.

### Comparative Preparation Example 2

An electrolyte for a rechargeable lithium battery was prepared in substantially the same manner as in Preparation Example 1 except that 5 wt% of a calcium salt (Ca[TFSI]₂) was utilized as the additive.

### Comparative Preparation Example 3

An electrolyte for a rechargeable lithium battery was prepared in substantially the same manner as in Preparation Example 1 except that 7 wt% of a calcium salt (Ca[TFSI]₂) was utilized as the additive.

### Manufacture of Rechargeable Lithium Battery Cell

### Example 1

LiNi_{0.88}Co_{0.07}Al_{0.05}O₂

as a positive electrode active material, polyvinylidene fluoride as a binder, and ketjen black as a conductive material were mixed respectively in a weight ratio of 97:2:1, and then, dispersed in N-methyl pyrrolidone to prepare positive electrode active material slurry.

The positive electrode active material slurry was coated on a 14 µm-thick Al foil, dried at 110 °C, and pressed to manufacture a positive electrode.

A mixture of artificial graphite and Si-C composite in a weight ratio of 93:7 was prepared as a negative electrode active material, and the negative electrode active material, a styrene-butadiene rubber, and carboxylmethyl cellulose in a weight ratio of 97:1:2 were dispersed in distilled water to prepare negative electrode active material slurry.

The Si-C composite included a core including artificial graphite and silicon particles and coal pitch coated on the surface of the core.

The negative electrode active material slurry was coated on a 10 µm-thick Cu foil, dried at 100 °C, and pressed to manufacture a negative electrode.

The manufactured positive and negative electrodes and a polyethylene separator having a thickness of 25 µm were assembled to manufacture an electrode assembly, and the electrolyte for a rechargeable lithium battery of Preparation Example 1 was injected to prepare a rechargeable lithium battery cell.

### Example 2

A rechargeable lithium battery cell was manufactured in substantially the same manner as in Example 1, except that the electrolyte for a rechargeable lithium battery according to Preparation Example 2 was injected.

### Example 3

A rechargeable lithium battery cell was manufactured in substantially the same manner as in Example 1, except that the electrolyte for a rechargeable lithium battery according to Preparation Example 3 was injected.

### Example 4

A rechargeable lithium battery cell was manufactured in substantially the same manner as in Example 1, except that the electrolyte for a rechargeable lithium battery according to Preparation Example 4 was injected.

### Example 5

A rechargeable lithium battery cell was manufactured in substantially the same manner as in Example 1, except that the electrolyte for a rechargeable lithium battery according to Preparation Example 5 was injected.

### Example 6

A rechargeable lithium battery cell was manufactured in substantially the same manner as in Example 1, except that the electrolyte for a rechargeable lithium battery according to Preparation Example 6 was injected.

### Example 7

A rechargeable lithium battery cell was manufactured in substantially the same manner as in Example 1, except that the electrolyte for a rechargeable lithium battery according to Preparation Example 7 was injected.

### Example 8

A rechargeable lithium battery cell was manufactured in substantially the same manner as in Example 1, except that the electrolyte for a rechargeable lithium battery according to Preparation Example 8 was injected.

### Comparative Example 1

A rechargeable lithium battery cell was manufactured in substantially the same manner as in Example 1, except that the electrolyte for a rechargeable lithium battery according to Comparative Preparation Example 1 was injected.

### Comparative Example 2

A rechargeable lithium battery cell was manufactured in substantially the same manner as in Example 1, except that the electrolyte for a rechargeable lithium battery according to Comparative Preparation Example 2 was injected.

### Comparative Example 3

A rechargeable lithium battery cell was manufactured in substantially the same manner as in Example 1, except that the electrolyte for a rechargeable lithium battery according to Comparative Preparation Example 3 was injected.

### Evaluation 1: Evaluation of Charge and Discharge Cycle Characteristics at Room Temperature

The rechargeable lithium battery cells according to Examples 1 to 8 and Comparative Examples 1 to 3 were measured with respect to a change in discharge capacity and a change in direct current internal resistance (DC-IR), while 250 cycles charged and discharged within 2.5 V to 4.2 V at a 0.5 C C-rate at 25 °C, and the results are shown in Table 1. In addition, the rechargeable lithium battery cells were evaluated with respect to cycle characteristics under the same conditions after the charges and discharges, and the results are shown in Table 1.

**Table 1**

| DOE | DC-IR Increase rate [%] | Capacity retention [%] |
|---|---|---|
| Comparative Example 1 | 20% | 65% |
| Comparative Example 2 | 16% | 80% |
| Comparative Example 3 | 8% | 74% |
| Example 1 | 11% | 86% |
| Example 2 | 10% | 91% |
| Example 3 | 7% | 93% |
| Example 4 | 6% | 93% |
| Example 5 | 6% | 89% |
| Example 6 | 8% | 85% |
| Example 7 | 7% | 92% |
| Example 8 | 8% | 90% |

Referring to Table 1, Examples 1 to 8 exhibited improved cycle-life characteristics at room temperature and were suppressed or reduced from an increase in resistance, compared with Comparative Examples 1 to 3.

Herein, the electrolytes for a rechargeable lithium battery according to Examples 1 to 8 included a calcium salt at an appropriate or suitable concentration as an additive, thereby realizing rechargeable lithium battery cells with improved cycle-life characteristics at room temperature.

### Evaluation 2: Evaluation of Storage Characteristics at High Temperature

The rechargeable lithium battery cells according to Examples 1 to 8 and Comparative Examples 1 to 3 were stored under the same conditions and then, measured with respect to internal resistance and capacity retention, and the results are shown in Table 2.

The rechargeable lithium battery cells were stored at a high temperature (60 °C) at 30-day intervals and then, measured with respect to direct current internal resistance (DC-IR) in SOC 50 under a discharge condition of a 0.5 C rate.

In addition, each of the rechargeable lithium battery cells of Examples 1 to 8 and Comparative Examples 1 to 3 was measured with respect to discharge capacity. Subsequently, the rechargeable lithium battery cells were stored at the high temperature at 30-day intervals and then, twice charged and discharged at 0.2 C and 60 °C to twice measure discharge capacity. A ratio of discharge capacity after the storage at the high temperature to discharge capacity before the storage at the high tempera was calculated, and first discharge capacity as capacity retention and second discharge capacity as recovery capacity were provided.

**Table 2**

| DOE | Initial DCIR [mΩ] | DCIR increase rate [%] | Retention capacity [%] | Recovery capacity [%] |
|---|---|---|---|---|
| Comparative Example 1 | 20 mΩ | 48% | 80% | 85% |
| Comparative Example 2 | 40 mΩ | 12% | 90% | 93% |
| Comparative Example 3 | 53 mΩ | 12% | 90% | 93% |
| Example 1 | 25 mΩ | 21% | 86% | 89% |
| Example 2 | 28 mΩ | 15% | 87% | 91% |
| Example 3 | 29 mΩ | 11% | 87% | 92% |
| Example 4 | 31 mΩ | 10% | 89% | 92% |
| Example 5 | 33 mΩ | 10% | 89% | 93% |
| Example 6 | 34 mΩ | 11% | 90% | 93% |
| Example 7 | 29 mΩ | 12% | 90% | 93% |
| Example 8 | 28 mΩ | 12% | 90% | 94% |

Referring to Table 2, Examples 1 to 8, compared with Comparative Examples 1 to 3, exhibited improved capacity retention or recovery rate at the high temperature and in addition, were suppressed or reduced from an increase in resistance.

In general, as a content of an additive is increased during storage at a high temperature, capacity retention or a recovery rate tends to be improved, but the additive is difficult to utilize due to large initial resistance. However, in Examples 1 to 8, as the content of an additive was increased, the capacity retention or the recovery rate was not only improved, but also the resistance increase was low despite partially high initial resistance was. For example, the initial resistance of each of Examples 1 to 8 itself was lower than that of Comparative Examples 2 and 3.

Herein, the electrolyte of an embodiment, which was represented by Examples 1 to 8, included a calcium salt at an appropriate or suitable concentration as an additive and turned out to realize a rechargeable lithium battery with improved storage performance at high temperature.

### Evaluation 3: Evaluation of Surface Characteristics of Negative Electrode after Evaluations 1 and 2

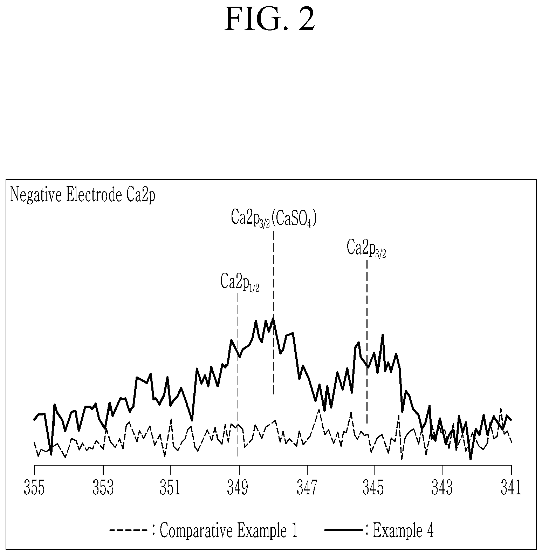

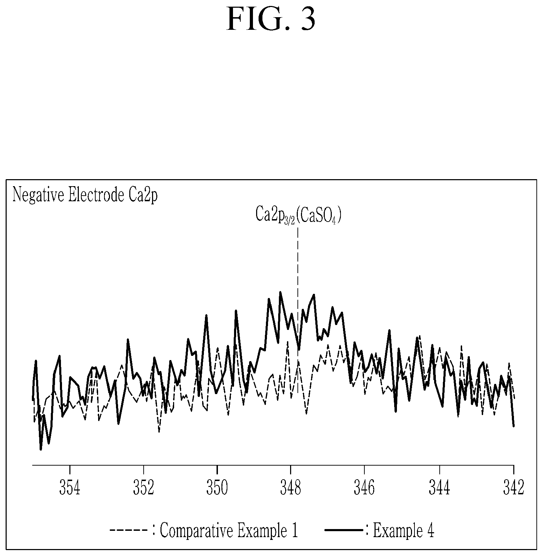

The rechargeable lithium battery cells of Example 4 and Comparative Example 1 were analyzed under the following condition, and the results are shown in FIGS. 2 and 3.

After Evaluation 1 was completed, the rechargeable lithium battery cells were dissembled to separate negative electrodes therefrom, and the negative electrodes were washed with DMC and surface-analyzed through X-ray photoelectron spectroscopy (XPS) (FIG. 2). After Evaluation 2 was completed, the same analysis of the rechargeable lithium battery cells was also performed (FIG. 3). For reference, a unit of a horizontal axis in FIGS. 2 and 3 is eV.

Referring to FIGS. 2 and 3, unlike Comparative Example 1, on the negative electrode surface of Example 4, a calcium salt was reduced, forming a lithium-friendly film. In addition, if Evaluations 1 to 3 were summarized, Examples 1 to 8 commonly had a lithium-friendly film formed on the negative electrode surface like Example 4, which shows that precipitation of lithium (for example, lithium dendrite) was suppressed or reduced under one or more suitable conditions such as room temperature, a high temperature, etc. Furthermore, if a lithium-friendly film was formed on the negative electrode surface, rapid charging cycle characteristics could be improved, which is examined in the following evaluation.

### Evaluation 4: Rapid Charging Cycle Characteristics

The rechargeable lithium battery cells according to Examples 1 to 8 and Comparative Examples 1 to 3 were measured with respect to a change in discharge capacity and a change in direct current internal resistance (DC-IR), while 120 cycles charged within 2.5 V to 4.2 V at a 3.0 C C-rate/ discharged at a 0.5 C C-rate at 25 °C, and the results are shown in Table 3. In addition, the rechargeable lithium battery cells were evaluated with respect to cycle characteristics after the charges and discharges under the same condition, and the results are shown in Table 3.

**Table 3**

| DOE | DC-IR Increase rate [%] | Retention capacity [%] |
|---|---|---|
| Comparative Example 1 | 40% | 52% |
| Comparative Example 2 | 32% | 47% |
| Comparative Example 3 | 35% | 43% |
| Example 1 | 31% | 78% |
| Example 2 | 27% | 82% |
| Example 3 | 25% | 83% |
| Example 4 | 24% | 85% |
| Example 5 | 22% | 84% |
| Example 6 | 21% | 78% |
| Example 7 | 27% | 83% |
| Example 8 | 27% | 82% |

Referring to Table 4, Examples 1 to 8 exhibited improved rapid charging cycle-life characteristics at room temperature and in addition, were suppressed or reduced from the resistance increase, compared with Comparative Examples 1 to 4.

In general, the lower the resistance (particularly, initial resistance) of a rechargeable lithium battery cell (or cells), the better the rapid charging performance. Here, Examples 1 to 8 exhibited partially high (e.g., not substantially high) initial resistance and provide excellent or suitable rapid charging performance, compared with Comparative Examples 1 to 3.

Herein, the electrolyte for a rechargeable lithium battery according to an embodiment, which was represented by Examples 1 to 8, included a calcium salt at an appropriate or suitable concentration as an additive, thereby realizing rechargeable lithium battery cells with improved cycle-life performance during the rapid charging.

The terminology utilized herein is utilized to describe embodiments only, and is not intended to limit the present disclosure. The singular expression includes the plural expression unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout, and duplicative descriptions thereof may not be provided the specification. It will be understood that if an element such as a layer, film, region, or substrate is referred to as being "on" another element, it can be directly on the other element or intervening element(s) may also be present. In contrast, if an element is referred to as being "directly on" another element, there are no intervening elements present.

In some embodiments, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and/or the like.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

In the present disclosure, if particles are spherical, "size" or "particle diameter" indicates a particle diameter or an average particle diameter, and if the particles are non-spherical, the "size" or "particle diameter" indicates a major axis length or an average major axis length. That is, if particles are spherical, "particle diameter" indicates a particle diameter, and when the particles are non-spherical, the "particle diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

### Description of Symbols

100: rechargeable lithium battery
112: negative electrode
113: separator
114: positive electrode
120: battery case
140: sealing member

## Claims

1. An electrolyte for a rechargeable lithium battery (100), the electrolyte comprising:
a non-aqueous organic solvent;
a lithium salt; and
a calcium salt,
wherein a concentration of the calcium salt in the electrolyte is greater than or equal to 0.01 wt% and less than 5 wt%.

2. The electrolyte of claim 1, wherein
the concentration of the calcium salt in the electrolyte is 0.01 wt% to 3 wt%, preferably 0.1 wt% to 3 wt%.

3. The electrolyte of claim 1 or 2, wherein
the calcium salt comprises a calcium phosphate salt, a calcium imide salt, a calcium nitrate salt, or a combination thereof.

4. The electrolyte of claim 3, wherein
the calcium salt comprises Ca(PF₆)₂, Ca[FSI]₂, Ca[TFSI]₂, Ca(NO₃)₂, or a combination thereof.

5. The electrolyte of any one of the preceding claims, wherein
the non-aqueous organic solvent comprises a carbonate-based, ester-based, ether-based, ketone-based, alcohol-based, or aprotic solvent.

6. The electrolyte of claim 5, wherein
the non-aqueous organic solvent comprises a carbonate-based solvent in which cyclic carbonate and chain carbonate are mixed in a volume ratio of 5:95 to 50:50.

7. The electrolyte of claim 6, wherein
ethylene carbonate (EC) is the cyclic carbonate, and
ethylmethyl carbonate (EMC) and dimethyl carbonate (DMC) are the chain carbonate.

8. The electrolyte of any one of the preceding claims, wherein
the lithium salt comprises one or more selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SOsC₂Fs)₂, Li(FSO₂)₂N (lithium bis(fluorosulfonyl)imide: LiFSI), LiC₄F₉SO₃, LiClO₄, LiAlO₂, LiAlCl₄, LiN(CₐF₂ₐ₊₁SO₂)(C_{b}F_{2b,1} SO₂), wherein a and b are an integer of 1 to 20, LiCl, Lil, and LiB(C₂O₄)₂ (lithium bis(oxalato) borate: LiBOB).

9. The electrolyte of claim 8, wherein
the concentration of the lithium salt in the electrolyte is 1.0 M to 2.0 M.

10. A rechargeable lithium battery (100), comprising
a positive electrode (114) comprising a positive electrode active material;
a negative electrode (112) comprising a negative electrode active material; and
the electrolyte of claim 1.

11. The rechargeable lithium battery of claim 10, wherein
the positive electrode active material comprises a lithium nickel-based composite oxide represented by Chemical Formula 1:
Chemical Formula 1 Lia₁Niₓ₁M¹_{y1}M²_{z1}O₂-b1X_{b1}
wherein, in Chemical Formula 1,
0.9≤a1≤1.2, 0.7≤x1≤1, 0≤y1≤0.2, 0≤z1≤0.2, 0.9≤x1+y1+z1≤1.1, and 0≤b1≤0.1;
M¹ and M² are each independently one or more elements selected from among Al, B, Ba, Ca, Ce, Co, Cr, Cu, Fe, Mg, Mn, Mo, Nb, Si, Sr, Ti, V, W, and Zr; and
X is one or more elements selected from among F, P, and S.

12. The rechargeable lithium battery of claim 10 or 11, wherein the negative electrode active material comprises at least one selected from among graphite and a Si composite.

13. The rechargeable lithium battery of claim 12, wherein the negative electrode active material comprises the Si composite,
the Si composite comprising:
a core comprising Si-containing particles; and
amorphous carbon.

14. The rechargeable lithium battery of claim 13, wherein the Si-containing particles comprise at least one selected from among Si-C composite, SiOₓ (0 < x ≤ 2), and an Si alloy.

15. The rechargeable lithium battery of claim 14, wherein the Si-containing particles comprise the Si-C composite,
the Si-C composite comprising:
a core comprising Si particles; and
amorphous carbon.
